# EUROPÄISCHE PATENTANMELDUNG

(11) **EP 0 768 649 A2**
(43) Veröffentlichungstag der Anmeldung: **16.04.1997**
(21) Anmeldenummer: 96115206.3
(22) Anmeldetag: 23.09.1996
(51) Int. Cl.: G11B 7/095, G11B 7/26, G11B 7/09

(54) **Vorrichtung zum Laserstrahlbelichten eines kreisscheibenförmigen Substrates**

(30) Priorität: 09.10.1995 DE 19537411
(71) Anmelder: Balzers und Leybold Deutschland Holding Aktiengesellschaft, 63450 Hanau (DE)
(72) Erfinder: Hensel, Bernd, 65760 Eschborn (DE); Hofmann, Friedrich, 63654 Büdingen (DE); Koop, Hermann, Dr., 30952 Ronnenberg (DE); Süss, Ralf, 81927 München (DE)
(74) Vertreter: Schlagwein, Udo, Dipl.-Ing.

(57) **Zusammenfassung**

Bei einer Vorrichtung zum Laserstrahlbelichten eines kreisscheibenförmigen Substrates (5) sind zum Verstellen eines Laserstrahl-Objektivs (11) relativ zum Schlitten (2) und zum Fokussieren des Laserstrahl-Objektivs (11) Festkörpergelenktische (19, 29) vorgesehen, welche jeweils einen Piezotranslator (24, 31) aufweisen. Dadurch wird es möglich, sehr rasch und sehr präzise eine Feinkorrektur der Stellbewegungen auszuführen.

## Beschreibung

Die Erfindung betrifft eine Vorrichtung zum Laserstrahlbelichten eines kreisscheibenförmigen Substrates, welche ein in einer Halterung mittels Piezotranslatoren verstellbar angeordnetes Laserstrahl-Objektiv und einen hierzu in einem Tisch mittels eines Radialantriebs quer verfahrbaren Schlitten hat, der eine auf einer von einem Drehantrieb antreibbaren Spindel angeordnete Substrataufnahme aufweist.

Für die Fertigung von Masterscheiben, mit denen optisch auslesbare Informationsträger, beispielsweise Compact-Disks erzeugt werden, ist es erforderlich, daß auf einer spiralförmig verlaufenden Spur der Masterscheibe entsprechend der digitalen Information mit Hilfe des Laserstrahls Pits in genau festgelegten Positionen plaziert werden. Dazu ist zusätzlich zu einer genau regelbaren Drehgeschwindigkeit eine sehr exakte Vorschubbewegung des Schlittens relativ zum Objektiv erforderlich. Weiterhin ist es bei der Herstellung solcher Masterscheiben notwendig, einen definierten Fokus, d.h. einen Lichtpunkt auf der Photoresistschicht des Substrates mit definiertem Spotdurchmesser abzubilden. Dies geht nur dann mit einer einmal fest eingestellten Endlinse, wenn das Substrat - in der Praxis meist eine Glasplatte - immer die gleiche Dicke hat und auf der Oberfläche absolut eben ist. In der Regel schwanken die Substratdicken im Nanometerbereich, während die Unebenheiten im µ-Bereich liegen. Das führt zu unterschiedlichen Abständen zwischen der Linse und der Substratoberfläche und damit zu einer Änderung des Laserspotdurchmessers auf dem Substrat. Um das zu vermeiden, ist es bekannt, die Endlinse des Laserstrahl-Objektivs mittels eines Tauchspulenantriebs automatisch entsprechend der sich ändernden Abstände zu verstellen. Es hat sich jedoch gezeigt, daß solche Antriebe eine zu geringe Dynamik haben, so daß durch zu langsames Regeln Unebenheiten auf den Substraten nicht ausgeglichen werden können und es deshalb zu Spotfehlern kommt. Dies gilt insbesondere dann, wenn mit höheren Recordinggeschwindigkeiten gefahren wird. Dann können bei einem solchen System nur Substrate mit teuer zu erzeugenden, sehr ebenen Oberflächen benutzt werden. Selbst dann sind keine Recordinggeschwindigkeiten von über 3 möglich.

Die DE-A-38 28 145 zeigt bereits eine Vorrichtung zum Laserstrahlbelichten eines kreisscheibenförmigen Substrates, bei der das Laserstrahl-Objektiv am freien Ende eines schwenkbar angeordneten Abtastarmes angebracht ist. Zur Fokuseinstellung ist an dem Abtastarm ein Piezotranslator angeordnet, durch welchen der Abtastarm eine den Abstand des Laserstrahl-Objektives vom Substrat verändernde Schwenkbewegung auszuführen vermag. Ein weiterer Piezotranslator vermag den Abtastarm in einer hierzu rechtwinkligen Ebene zu verschwenken, was der raschen Spurfolge-Nachstellung bzw. Korrektur in Spurrichtung dient.

Nachteilig bei der bekannten Vorrichtung ist es, daß die durch die Piezotranslatoren hervorgerufenen Stellbewegungen zu einer Bewegung des Laserstrahl-Objektivs auf einem Kreisbogen führen. Dadurch kommt es zu Ungenauigkeiten, welche die Leistungsfähigkeit der Vorrichtung begrenzen.

Die US-A-4,385,373 zeigt eine Vorrichtung zum Laserstrahlbelichten, bei der das Laserstrahl-Objektiv in einem Rahmen von vier als Biegekörper ausgebildeten, speichenartigen Piezoelementen gehalten wird. Durch gleichzeitiges Ansteuern aller Piezoelemente vermögen diese sich zu biegen und dadurch den Abstand des Laserstrahl-Objektivs vom Substrat zu verstellen.

Die in dieser Schrift erläuterte Fokusverstellung hat den Nachteil, daß es bei unterschiedlichen Biegungen der Piezoelemente zu einem Kippen des Laserstrahl-Objektivs kommt. Da zwangsläufig nicht alle Piezoelemente ein absolut identisches Verhalten zeigen, lassen sich solche Kippbewegungen niemals ganz vermeiden, so daß wiederum die Genauigkeit der Fokusverstellung zu wünschen übrigläßt, obgleich durch die vier Piezoelemente ein hoher Aufwand für möglichst rasche und schnelle Stellbewegungen betrieben wurde.

Der Erfindung liegt das Problem zugrunde, eine Vorrichtung der eingangs genannten Art so zu gestalten, daß das Laserstrahl-Objektiv möglichst rasche und präzise Stellbewegungen auszuführen vermag, so daß Masterscheiben mit hoher Geschwindigkeit und Informationsdichte erzeugt werden können.

Dieses Problem wird erfindungsgemäß dadurch gelöst, daß zur Feinverstellung des Laserstrahl-Objektivs relativ zur Bewegungsrichtung des Schlittens und/oder zum Feinfokussieren des Laserstrahl-Objektivs die Piezotranslatoren an einem Festkörpergelenktisch vorgesehen sind, welcher zum linearen Verschieben des Laserstrahl-Objektivs durch einen Piezotranslator ausschließlich in eine Richtung und zum linearen Verschieben des Laserstrahl-Objektivs in eine hierzu rechtwinklige, mit der optischen Achse des Laserstrahl-Objektivs fluchtende Richtung ausgebildet ist.

Bei einer solchen Vorrichtung bildet der Festkörpergelenktisch einen Kreuzschlitten, wie er insbesondere von Drehbänken her geläufig ist, was sehr präzise lineare Stellbewegungen zum Fokussieren und zur Korrektur der Spurfolge ermöglicht. Dadurch erlaubt die erfindungsgemäße Vorrichtung mit relativ geringem Kostenaufwand eine hohe Aufzeichnungsgeschwindigkeit und große Informationsdichte. Der Festkörpergelenktisch führt zu einer hohen Führungsgenauigkeit, so daß die präzisen Längenänderungen des jeweiligen Piezotranslators in entsprechend präzise Stellbewegungen umgesetzt werden können.

Eine konstruktiv besonders einfache und sehr steife Ausführungsform besteht darin, daß der Festkörpergelenktisch einen an einem Bauteil zu befestigenden Rahmen hat, in welchem durch Gelenke verbunden ein Innenteil durch den einen Piezotranslator in die eine Richtung verschiebbar angeordnet ist, und daß das Innenteil fest mit einem Innenteil eines zweiten Festkörpergelenktisches verbunden ist, welcher ebenfalls einen Rahmen hat, der durch einen weiteren Piezotranslator in die andere Richtung verschiebbar auf dem Innenteil angeordnet ist.

Zur weiteren Vereinfachung des konstruktiven Aufbaus trägt es bei, wenn der Piezotranslator einerseits gegen den Rahmen, andererseits gegen das Innenteil abgestützt ist und wenn das Innenteil mit Hilfe einer Druckfeder gegen den Piezotranslator vorgespannt ist.

Zu Stellfehlern führende Verkantungskräfte lassen sich dadurch auf einfache Weise ausschließen, daß gemäß einer anderen Weiterbildung der Erfindung der Piezotranslator jeweils unter Zwischenschaltung einer Kugel am Rahmen und am Innenteil und die Druckfeder ebenfalls über eine Kugel am Innenteil abgestützt sind.

Der Festkörpergelenktisch ist besonders kompakt ausgebildet, wenn das Innenteil eine Sackbohrung hat, in welche der Piezotranslator greift.

Die Korrektur der Position des Laserstrahl-Objektivs relativ zum Schlitten und damit relativ zu dem Substrat kann auf einfache Weise dadurch erfolgen, daß zur Bestimmung der Position des Schlittens relativ zum Laserstrahl-Objektiv eine Meßeinrichtung mit einem Maßstab am Tisch und einem Sensor am Schlitten vorgesehen ist und daß Mittel zum Ansteuern des die horizontale Verschiebung des Laserstrahl-Objektivs herbeiführenden Piezotranslators in Abhängigkeit von den Signalen des Sensors vorgesehen sind.

Die Erfindung läßt verschiedene Ausführungsformen zu. Eine davon ist stark schematisch in der Zeichnung dargestellt und wird nachfolgend beschrieben. Diese zeigt in
- Fig.1: eine Seitenansicht einer erfindungsgemäßen Vorrichtung,
- Fig.2: eine Draufsicht auf die Vorrichtung,
- Fig.3: eine perspektivische Ansicht eines Festkörpergelenktisches mit angrenzenden Bauteilen,
- Fig.4: einen Schnitt durch einen Piezotranslator nach der Erfindung.

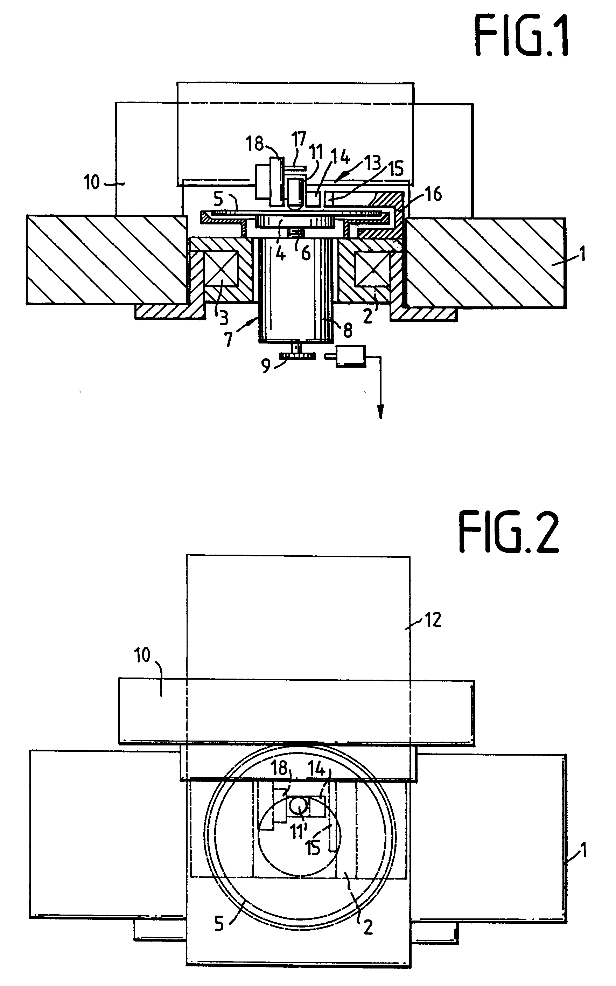

Die Figur 1 zeigt einen Tisch 1, in welchem ein Schlitten 2 auf Luftlagern 3 quer zur Zeichnungsebene verfahrbar ist. Der Schlitten 2 hat eine Substrataufnahme 4, auf der ein als Masterscheibe dienendes Substrat 5 durch Unterdruck gehalten ist. Die Substrataufnahme 4 ist am oberen Ende einer Spindel 6 vorgesehen, welche ihrerseits in einem nicht gezeigten Luftlager des Schlittens 2 drehbar gelagert ist. Zum Antrieb der Spindel 6 und damit der Substrataufnahme 4 dient ein Drehantrieb 7 mit einem Motor 8, der zusammen mit einem Drehimpulsgeber 9 am unteren Ende der Spindel 6 angeflanscht ist. Über den Tisch 1 führt eine Brücke 10, welche ein Laserstrahl-Objektiv 11 haltert.

Zum Verfahren des Schlittens 2 dient ein in Figur 2 angedeuteter Radialantrieb 12. Arbeitet dieser, dann bewegt sich das Substrat 5 quer zu dem Laserstrahl-Objektiv 11, so daß infolge der gleichzeitigen Drehung der Substrataufnahme 4 mit dem Substrat 5 Pits auf einer spiralförmigen Spur auf dem Substrat 5 belichtet werden können.

Ein Meßeinrichtung 13 hat einen möglichst nahe am Objektiv befestigten Sensor 14 und einen auf dem Tisch 1 befestigten, in Bewegungsrichtung des Tisches 1 ausgerichteten Maßstab 15. Die Figur 1 läßt einen u-förmigen Träger 16 erkennen, welcher über das Substrat 5 greift und dafür sorgt, daß der Maßstab 15 unmittelbar vor dem Sensor 14 verläuft.

Das Objektiv 11 wird von einem Halter 17 getragen, welcher einen Stellantrieb 18 mit einem Piezotranslator aufweist. Hierdurch lassen sich geringe Stellbewegungen des Objektivs 11 auf der Vorschubachse des Tisches 1 erreichen.

Die Figur 2 zeigt insbesondere die Ausrichtung des Maßstabes 15 in Bewegungsrichtung des Schlittens 2. Dadurch lassen sich mit dem Sensor 14 ständig genaue Informationen über die Position des Schlittens 2 relativ zum Laserstrahl-Objektiv 11 gewinnen. Entsprechen diese infolge von Ungenauigkeiten des Radialantriebs 12 nicht dem Sollwert, so wird die Position durch Verschieben des Laserstrahl-Objektivs 11 mittels des Stellantriebs 18 korrigiert.

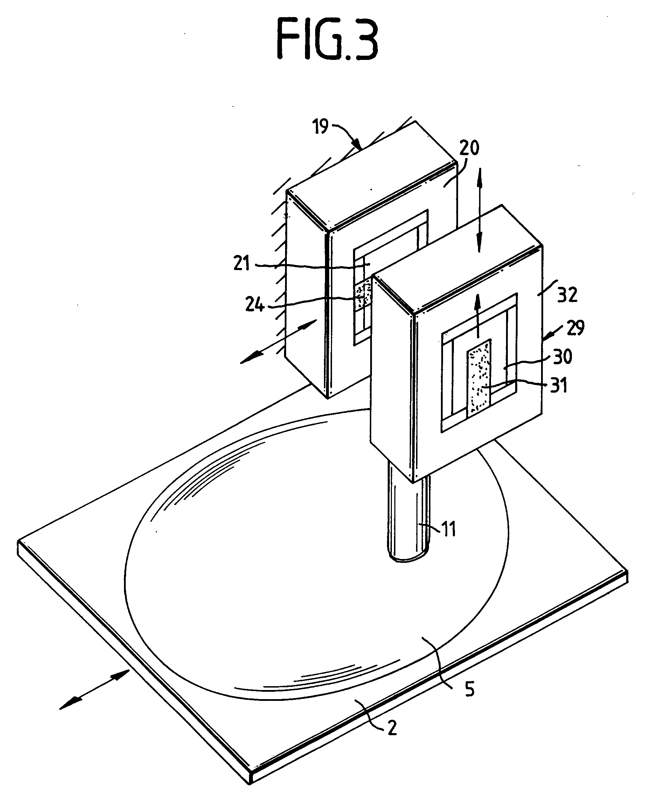

Die Figur 3 zeigt zwei miteinander verbundene Festkörpergelenktische 19 und 29. Der Festkörpergelenktisch 19 ist fest mit der in Figur 1 gezeigten Brücke 10 verbunden. Er hat ein Innenteil 21, welches mittels eines Piezotranslators 24 in einer Horizontalebene relativ zu einem Rahmen 20 verschoben werden kann. Das Innenteil 21 ist fest mit einem Innenteil 30 des zweiten Festkörpergelenktisches 29 verbunden und vermag mittels eines Piezotranslators 31 einen Rahmen 32 in Vertikalrichtung zu verstellen. Dieser Rahmen 32 trägt das in Figur 1 gezeigte Laserstrahl-Objektiv 11, welches zum Belichten des Substrates 5 dient.

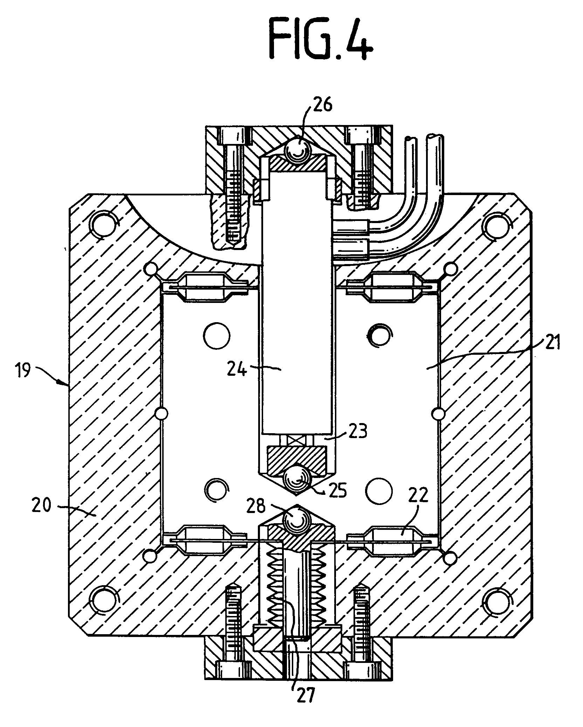

Die Figur 4 zeigt einen Schnitt durch einen Festkörpergelenktisch 19. Dieser besteht aus dem schon erwähnten geschlossenen Rahmen 20 und dem darin begrenzt verschieblich angeordneten Innenteil 21. Dieses Innenteil 21 ist durch vier schematisch angedeutete Gelenke 22 mit dem Rahmen 20 verbunden. Das Innenteil 21 hat eine Sackbohrung 23, in die ein Piezotranslator 24 aus einzelnen Piezoelementen greift und der sich über eine Kugel 25 gegen den Boden der Sackbohrung 23 und mit einer Kugel 26 am Rahmen 20 bzw. einem mit ihm fest verbundenen Bauteil abstützt.

Im unteren Bereich der Figur 4 erkennt man eine Druckfeder 27, welche einerseits am Rahmen 20, andererseits über eine Kugel 28 am Innenteil 21 abgestützt ist und dadurch das Innenteil 21 gegen den Piezotranslator 24 vorspannt.

Wird der Piezotranslator 24 mit unterschiedlichen Spannungen beaufschlagt, dann verändert er seine Länge im Nanometerbereich und verschiebt deshalb das Innenteil 21 relativ zum Rahmen 20. Wenn man zum Beispiel den Rahmen 20 ortsfest anordnet und das Innenteil 21 mit dem Laserstrahl-Objektiv 11 verbindet, dann lassen sich auf diese Weise geringe Verstellbewegungen des Laserstrahl-Objektivs 11 erzeugen.

### Bezugszeichenliste

- 1: Tisch
- 2: Schlitten
- 3: Luftlager
- 4: Substrataufnahme
- 5: Substrat
- 6: Spindel
- 7: Drehantrieb
- 8: Motor
- 9: Drehimpulsgeber
- 10: Brücke
- 11: Laserstrahl-Objektiv
- 12: Radialantrieb
- 13: Meßeinrichtung
- 14: Sensor
- 15: Maßstab
- 16: Träger
- 17: Halter
- 18: Stellantrieb
- 19: Festkörpergelenktisch
- 20: Rahmen
- 21: Innenteil
- 22: Gelenk
- 23: Sackbohrung
- 24: Piezotranslator
- 25: Kugel
- 26: Kugel
- 27: Druckfeder
- 28: Kugel
- 29: Festkörpergelenktisch
- 30: Innenteil
- 31: Piezotranslator
- 32: Rahmen

## Patentansprüche

1. Vorrichtung zum Laserstrahlbelichten eines kreisscheibenförmigen Substrates, welche ein in einer Halterung mittels Piezotranslatoren verstellbar angeordnetes Laserstrahl-Objektiv und einen hierzu in einem Tisch mittels eines Radialantriebs quer verfahrbaren Schlitten hat, der eine auf einer von einem Drehantrieb antreibbaren Spindel angeordnete Substrataufnahme aufweist, **dadurch gekennzeichnet**, daß zur Feinverstellung des Laserstrahl-Objektivs (11) relativ zur Bewegungsrichtung des Schlittens (2) und/oder zum Feinfokussieren des Laserstrahl-Objektivs (11) die Piezotranslatoren (24, 31) an einem Festkörpergelenktisch (19) vorgesehen sind, welcher zum linearen Verschieben des Laserstrahl-Objektivs (11) durch einen Piezotranslator (24) ausschließlich in eine Richtung und zum linearen Verschieben des Laserstrahl-Objektivs (11) in eine hierzu rechtwinklige, mit der optischen Achse des Laserstrahl-Objektivs (11) fluchtende Richtung ausgebildet ist.

2. Vorrichtung nach Anspruch 1, **dadurch gekennzeichnet**, daß der Festkörpergelenktisch (19) einen an einem Bauteil zu befestigenden Rahmen (20) hat, in welchem durch Gelenke (22) verbunden ein Innenteil (21) durch den einen Piezotranslator (24) in die eine Richtung verschiebbar angeordnet ist und daß das Innenteil (21) fest mit einem Innenteil (30) eines zweiten Festkörpergelenktisches (29) verbunden ist, welcher ebenfalls einen Rahmen (32) hat, der durch einen weiteren Piezotranslator (31) in die andere Richtung verschiebbar auf dem Innenteil (30) angeordnet ist.

3. Vorrichtung nach Anspruch 2, **dadurch gekennzeichnet**, daß der Piezotranslator (24, 31) einerseits gegen den Rahmen (20, 32), andererseits gegen das Innenteil (21, 30) abgestützt ist und daß das Innenteil (21, 30) mit Hilfe einer Druckfeder (27) gegen den Piezotranslator (24, 31) vorgespannt ist.

4. Vorrichtung nach Anspruch 3, **dadurch gekennzeichnet**, daß die Piezotranslatoren (24, 31) jeweils unter Zwischenschaltung einer Kugel (25, 26) am Rahmen (20, 32) und am Innenteil (21, 30) und die Druckfeder (27) ebenfalls über eine Kugel (28) am Innenteil (21, 30) abgestützt sind.

5. Vorrichtung nach zumindest einem der vorangehenden Ansprüche, **dadurch gekennzeichnet**, daß das Innenteil (21, 30) eine Sackbohrung (23) hat, in welche der Piezotranslator (24, 31) greift.

6. Vorrichtung nach zumindest einem der vorangehenden Ansprüche, **dadurch gekennzeichnet**, daß zur Bestimmung der Position des Schlittens (2) relativ zum Laserstrahl-Objektiv (11) eine Meßeinrichtung (13) mit einem Maßstab (15) am Tisch (1) und einem Sensor (14) am Schlitten (2) vorgesehen ist und daß Mittel zum Ansteuern des die horizontale Verschiebung des Laserstrahl-Objektivs (11) herbeiführenden Piezotranslators (24) in Abhängigkeit von den Signalen des Sensors (14) vorgesehen sind.
